# EUROPEAN PATENT APPLICATION

(11) **EP 2 922 017 A1**
(43) Date of publication of application: **23.09.2015**
(21) Application number: 15159587.3
(22) Date of filing: 18.03.2015
(51) Int. Cl.: G06Q 50/06

(54) **Apparatus for data processing of energy management system**

(30) Priority: 20.03.2014 KR 20140032701
(71) Applicant: LSIS Co., Ltd., Anyang-si, Gyeonggi-do 431-848 (KR)
(72) Inventor: Lee, Seung Ju, 431-848 Anyang-si, Gyeonggi-do (KR); Lee, Myung Hwan, 431-848 Anyang-si, Gyeonggi-do (KR); Yoon, Yeo Chang, 431-848 Anyang-si, Gyeonggi-do (KR); Kong, Shin Jo, 431-848 Anyang-si, Gyeonggi-do (KR); Park, Jong Ho, 431-848 Anyang-si, Gyeonggi-do (KR)
(74) Representative: Lang, Johannes

(57) **Abstract**

An apparatus for data processing is provided. The apparatus includes: a data obtaining unit obtaining power system data from pieces of power system equipment; a power system monitoring unit displaying a power system operation state based on power system data obtained from the data obtaining unit, raising an alarm when the power system operation state changes, and outputting reference data corresponding to data on which the alarm occurs; a DB storing the power system data obtained from the data obtaining unit, alarm raising criterion information on the power system data, and reference data corresponding to the power system data; and a remote control unit transmitting a control signal for controlling the pieces of power system equipment based on the power system operation state displayed on the power system monitoring unit.

## Description

### BACKGROUND

The present disclosure relates to an apparatus for data processing for an energy management system.

A typical energy management system may perform management and monitoring on the state of energy by material collection or material link to a broad power system. In the case of an alarm typically provided to be utilized for monitoring the operation state of a power system, an operation for recognizing a change in the operation state when there is the change is typically performed. The alarm for event occurrence corresponding to such a simple condition has a limitation in that it is difficult to check alarm information in detail with respect to a change in operation state occurring continuously/repetitively or by a control signal from a user.

That is, when an alarm for data obtained from a typical energy management system is processed, only an alarm for a notification of an error in corresponding data or erroneous data sensing is performed. Thus, it is practically difficult to recognize detailed information on a generated alarm and on a point corresponding to the alarm.

### SUMMARY

Embodiments provide an apparatus for data processing for an energy management system.

In one embodiment, an apparatus for data processing includes: a data obtaining unit obtaining power system data from pieces of power system equipment; a power system monitoring unit displaying a power system operation state based on power system data obtained from the data obtaining unit, raising an alarm when the power system operation state changes, and outputting reference data corresponding to data on which the alarm occurs; a DB storing the power system data obtained from the data obtaining unit, alarm raising criterion information on the power system data, and reference data corresponding to the power system data; and a remote control unit transmitting a control signal for controlling the pieces of power system equipment based on the power system operation state displayed on the power system monitoring unit.

The reference data may include output information on a point outputting the power system data obtained from the data obtaining unit, and single line diagram display information.

The power system monitoring unit may read reference data matching data on a generated alarm event and display the reference data, when the alarm event is generated.

The power system monitoring unit may display a list of a plurality of pieces of reference data and display information on a reference data item selected in the list, when the reference data matching the data corresponding to the generated alarm event is in plurality.

The power system monitoring unit may display a plurality of pieces of reference data on a plurality of windows, respectively when the reference data matching the data corresponding to the generated alarm event is in plurality.

The DB may include at least one piece of reference data for a piece of data, with an identifier.

The DB may include: an obtained data storage unit for string obtained data; a matching data storage unit storing reference data corresponding to obtained data; and a history data storage unit storing display information on the obtained data and the matching data, and alarm output information.

The apparatus for data processing of an energy management system according to an embodiment may enable a user to easily check an alarm, easily check corresponding detailed information and rapidly treat a corresponding accident, when the alarm for obtained data occurs.

The details of one or more embodiments are set forth in the accompanying drawings and the description below. Other features will be apparent from the description and drawings, and from the claims.

### BRIEF DESCRIPTION OF THE DRAWINGS

Fig. 1 is a schematic block diagram of an energy management system (EMS) according to an embodiment.
Fig. 2 is a block diagram of a EMS DB according to an embodiment.
Fig. 3 is a block diagram of a power system monitoring unit according to an embodiment.
Fig. 4 is a flowchart of the operation of creating reference data on alarm data according to an embodiment.
Figs. 5 and 6 are exemplary diagrams for explaining the structure of the reference data on the alarm data according to an embodiment.
Fig. 7 is an exemplary view of a screen capable of being displayed for reference data creation according to an embodiment.
Fig. 8 is a flowchart for explaining the display operation of reference data corresponding to alarm data according to an embodiment.
Figs. 9 to 10b are exemplary diagrams for explaining the display operation of reference data according to an embodiment.

### DETAILED DESCRIPTION OF THE EMBODIMENTS

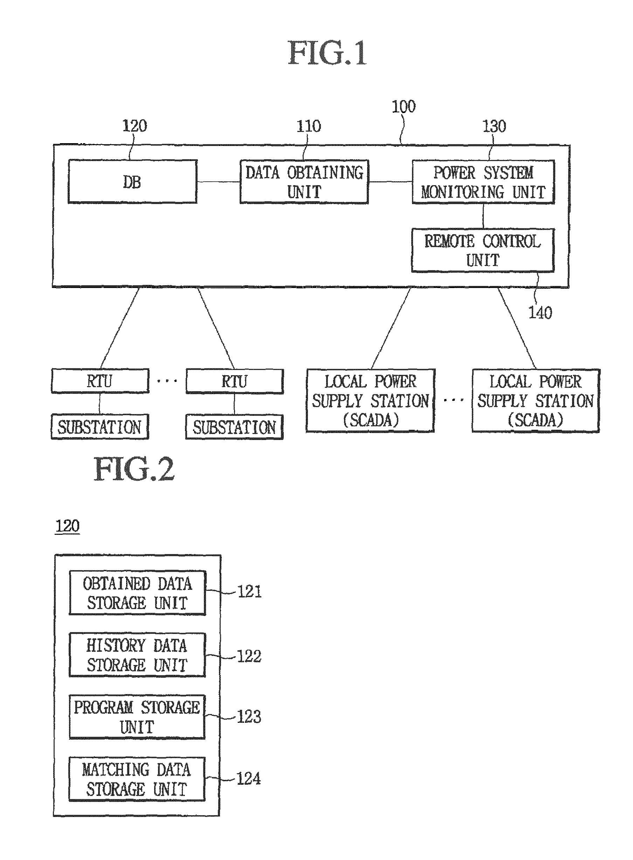

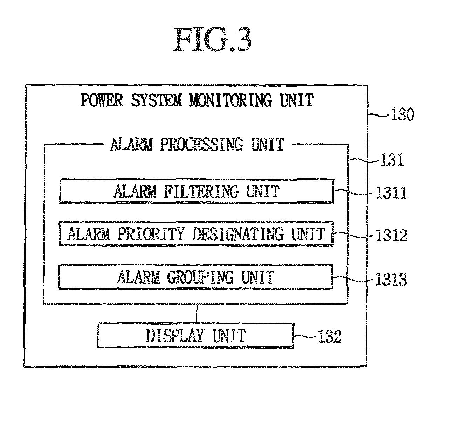

Fig. 1 is a schematic block diagram of an energy management system (EMS) according to an embodiment, Fig. 2 is a block diagram of a EMS DB according to an embodiment, and Fig. 3 is a block diagram of a power system monitoring unit according to an embodiment.

Referring to Figs. 1 to 3, the EMS 100 according to an embodiment may include a data obtaining unit 110 obtaining power system data from power system equipment to store/manage the data, a DB 120 storing data and programs for storing and operating obtained data, a power system monitoring unit 130 displaying the operation state of a power system based on data obtained from the data obtaining unit 110 and raising the alarm when there is a change in state, and a remote control unit 140 transmitting a control signal for a signal for the power system equipment based on the operation state of the power system displayed on the power system monitoring unit 130.

The data obtaining unit 110 may obtain data on the states of pieces of power equipment (generator, substation, circuit breaker etc.) configuring the power system on the EMS to store and manage the data. In particular, the data obtaining unit 110 may obtain a material from a remote terminal unit (RTU) installed in the generator or substation to store the material in the DB 120. Also, the data obtaining unit 110 may obtain data from a Supervisory Control and Data Acquisition System (SCADA) in a local power supply station or from an external system to store the data in the DB.

The DB 120 may store data obtained from the data obtaining unit 110 and programs for processing the data. Also, the DB 120 may store information on the processed history and alarm history of obtained data. The DB 120 according to an embodiment may include an obtained data storage unit 121, a history data storage unit 122, a program storage unit 123, and a mapping data storage unit 124.

The obtained data storage unit 121 may store data obtained from the data obtaining unit 110 in a lump. The obtained data storage unit 121 may include information on a data obtaining device or system and store data received from the device or system in real time.

The history data storage unit 122 may store data processed in the power system monitoring unit 130 and the remote control unit 140 and data on a driving history.

The program storage unit 123 may store programs for processing obtained data by the power system monitoring unit 130 and the remote control unit 140 and programs for processing control programs generated based on the data. Also, the program storage unit 123 may data and image processing programs for displaying reference data on target data for which the alarm occurs, among obtained data according to an embodiment of the present invention.

The mapping data storage unit 124 may match obtained data with reference data including point information outputting corresponding data, single line diagram information, and alarm information according to an embodiment. The mapping data storage unit 124 may link the reference data to correspond to the obtained data.

The power system monitoring unit 130 may display the operation state of a power system based on data that the data obtaining unit 110 has obtained and stored, and may play a role in raising the alarm when there is a change in state. The power system monitoring unit 130 may include an alarm processing unit 131 and a display unit 132.

The alarm processing unit 131 may perform a preset limit value check, state change check, and validity check and play a role in raising the alarm for data not matching a corresponding criterion.

The alarm processing unit 131 may include an alarm filtering unit 1311, an alarm priority designating unit 1312, and an alarm grouping unit 1313.

The alarm filtering unit 1311 may classify alarm data, and the type and category of the alarm data received and processed by the alarm processing unit 131 and store a classification result in the DB 120.

The alarm priority designating unit 1312 may designate a priority to generate the alarm when an alarm for obtained data should occur, and perform alarm processing accordingly.

The alarm grouping unit 1313 may perform grouping on the same alarm events based on history data stored with respect to the obtained data. In particular, when an alarm for obtained data occurs according to an embodiment, it is possible to group an alarm similar to a corresponding alarm and to share reference data with respect to grouped alarms.

The display unit 132 may display obtained data and alarm information. When the alarm information is displayed, the display unit 132 may display the alarm data selected from a user along with pre-stored reference data.

The remote control unit 140 may perform control over pieces of power system equipment based on an operation state displayed on the power system monitoring unit 130. The remote control unit 140 may transmit a control command input from a user to the pieces of power system equipment, receive a response to the control command and store a related material in the alarm processing unit 131 and the DB 120.

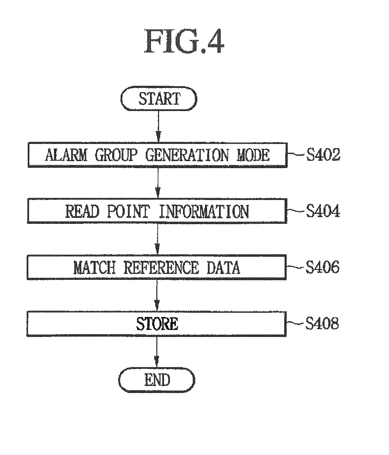

The operation of creating reference data is described in detail with reference to Figs. 4 to 6 based on the configuration above.

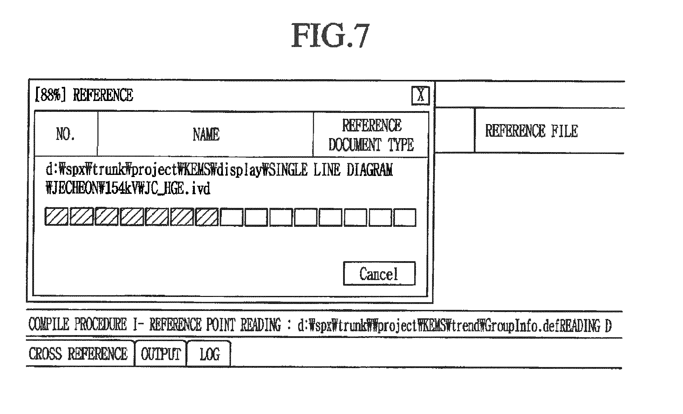

Fig. 4 is a flowchart of the operation of creating reference data on alarm data according to an embodiment, and Fig. 7 is an exemplary view of a screen capable of being displayed for reference data creation according to an embodiment.

Referring to Figs. 4 and 7, when performing alarm processing on data collected through the data obtaining unit 110, the power system monitoring unit 130 according to an embodiment may perform an alarm group generation mode for linking reference data corresponding to that data in step S402.

The power system monitoring unit 130 may read point information on obtained data in step S404. The point may be a configuration point including a circuit breaker included in a device outputting the obtained data.

The power system monitoring unit 130 may match read point information with corresponding single line diagram information and history information to create reference data in step S406. In this case, it is possible to display information on a creation state when the reference data is created, as shown in Fig. 7. Fig. 7 displays a progress bar showing a progress state and information on a storage location.

The power system monitoring unit 130 may create reference data including point information on data and single line diagram information, and store created reference data in the DB 120.

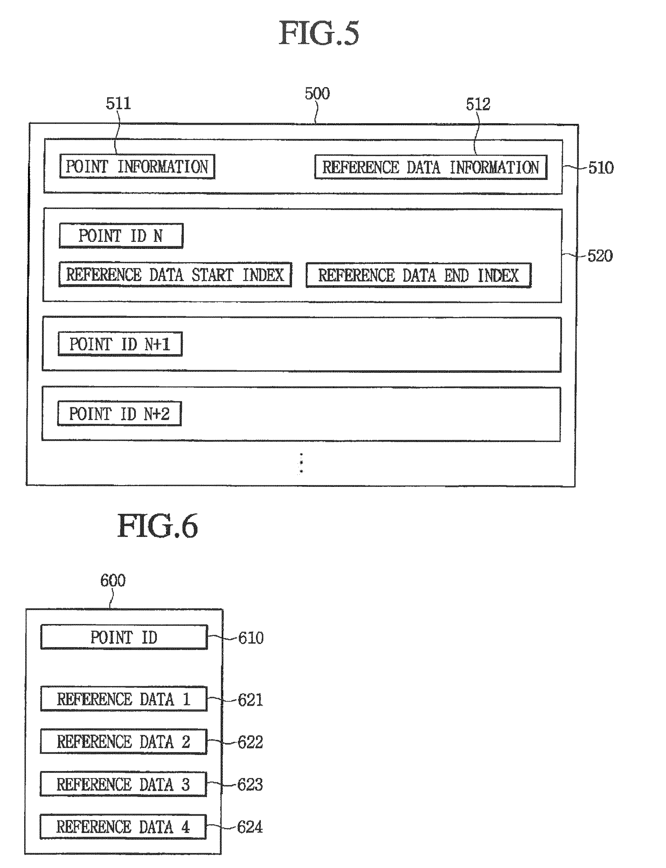

The created reference data may be stored in the forms as shown in Figs. 5 and 6.

Figs. 5 and 6 are exemplary diagrams for explaining the structure of reference data on alarm data according to an embodiment.

Figs. 5 and 6 represents reference data information tables that have a tabular form including information on created reference data.

The reference data according to an embodiment may include obtained data and corresponding reference data information 510 in a data table 500.

Point information 511 may be information on a device outputting the obtained data and the reference data may include information on the size and type of the reference data matching the data.

The reference data information 512 may include point information on the obtained data, single line diagram display information, and information on the number, size and link relationship of pieces of information.

The data table 500 may include a plurality of point items 520 including information on an identifier ID for a point and on at least one piece of reference data corresponding to the point. When the reference data corresponding to the point identifier is in plurality, it is possible to include start index and last index information on the reference data.

Fig. 6 is an exemplary diagram representing reference data corresponding to the point identifier in Fig. 5 and may include a single line diagram including a corresponding point that may be displayed when a point identifier 610 is selected, and a plurality of pieces of reference data 621 to 624 including history data.

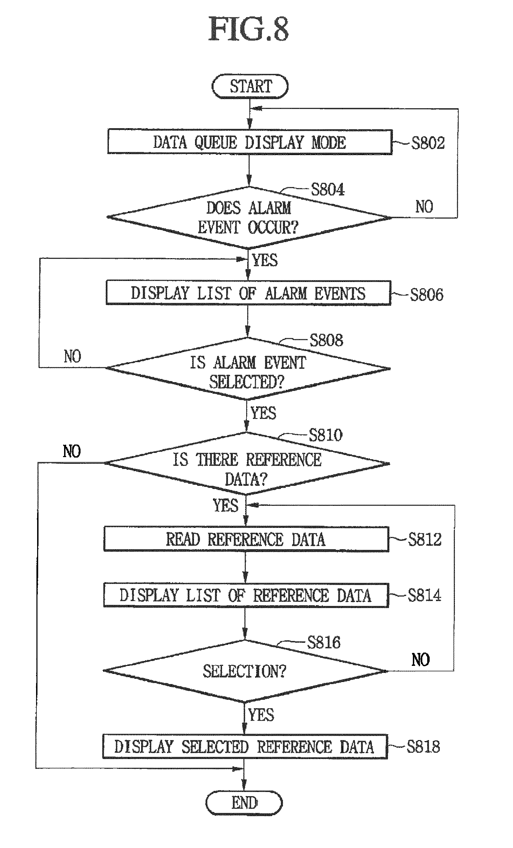

The reference data has been created by the above-described operations and a reference data display operation according to an alarm data output is described in detail with reference to Figs. 8 to 10b.

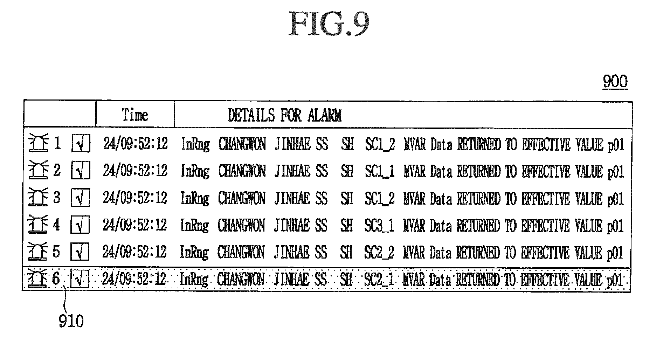

Fig. 8 is a flowchart for explaining the display operation of reference data corresponding to alarm data according to an embodiment, and Figs. 9 to 10b are exemplary diagrams for explaining the display operation of reference data according to an embodiment.

Referring to Figs. 8 to 10b, the power system monitoring unit 130 according to an embodiment may perform a data queue display mode displaying data obtained from the data obtaining unit 110 and state information on a device in step S802.

The power system monitoring unit 130 may perform a limit value check, state change check and validity check on obtained data and determine the occurrence of an alarm event according to a corresponding result value in step S804.

When sensing that an alarm event for obtained data has occurred, the power system monitoring unit 130 may display, a list of alarm events that have occurred, as a list of alarm events 900 as shown in Fig. 9 in step S806.

The power system monitoring unit 130 may determine whether a selection signal for searching for a corresponding alarm event is input by a user from the list of alarm events 900 in step S808.

The power system monitoring unit 130 may determine whether there is reference data on a selected alarm event item 910 in step S810.

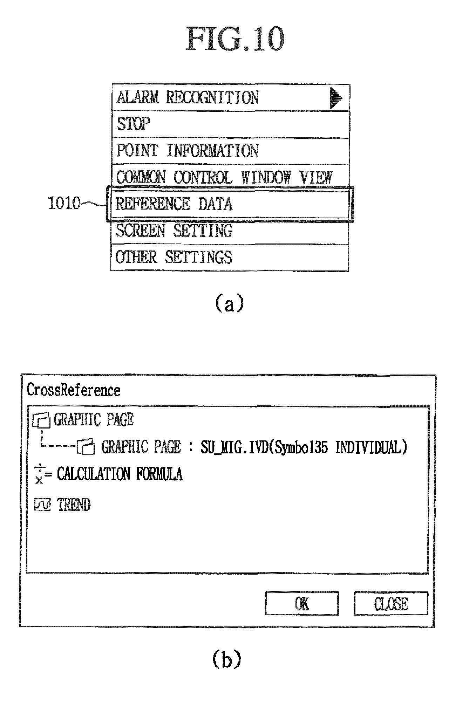

When there is preset reference data on the selected alarm event item 910, The power system monitoring unit 130 may read corresponding reference data. In this case, in order to check a reference event for the selected alarm event item 910, it is possible to display a menu 1010 for reference event activation for the selected alarm event item as shown in Fig. 10a and read the reference event according to menu selection in step S812.

The power system monitoring unit 130 may display read reference data in the list as shown in Fig. 10b in step S814.

The power system monitoring unit 130 may check selection in a reference data list in step S816 and check and display selected reference data in step S818. Displayed reference may display data state information on a corresponding point in the form of text or display, as an image, information on the corresponding point included in a single line diagram. Also, when the reference data is selected in plurality, it is possible to display the reference data through a plurality of windows, respectively and the shapes of the reference data displayed on each window may be different.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An apparatus (100) for data processing comprising:
a data obtaining unit (110) obtaining power system data from pieces of power system equipment;
a power system monitoring unit (130) displaying a power system operation state based on power system data obtained from the data obtaining unit, raising an alarm when the power system operation state changes, and outputting reference data corresponding to data on which the alarm occurs;
a DB (120) storing the power system data obtained from the data obtaining unit, alarm raising criterion information on the power system data, and reference data corresponding to the power system data; and
a remote control unit (140) transmitting a control signal for controlling the pieces of power system equipment based on the power system operation state displayed on the power system monitoring unit.

2. The apparatus according to claim 1, wherein the reference data comprises output information on a point outputting the power system data obtained from the data obtaining unit (110), and single line diagram display information.

3. The apparatus according to claim 2, wherein the power system monitoring unit (130) reads reference data matching data on a generated alarm event and displays the reference data, when the alarm event is generated.

4. The apparatus according to claim 3, wherein the power system monitoring unit (130) displays a list of a plurality of pieces of reference data and displays information on a reference data item selected in the list, when the reference data matching the data corresponding to the generated alarm event is in plurality.

5. The apparatus according to claim 3, wherein the power system monitoring unit (130) displays a plurality of pieces of reference data on a plurality of windows, respectively when the reference data matching the data corresponding to the generated alarm event is in plurality.

6. The apparatus according to claim 2, wherein the DB (120) includes at least one piece of reference data for a piece of data with an identifier.

7. The apparatus according to claim 1, wherein the DB (120) comprises:
an obtained data storage unit (121) for storing obtained data;
a matching data storage unit (124) storing reference data corresponding to obtained data; and
a history data storage unit (122) storing display information on the obtained data and the matching data, and alarm output information.
